## Europäisches Patentamt

## European Patent Office

## Office européen des brevets

(11) Veröffentlichungsnummer: **0 159 021**

**B1**

(12) **EUROPÄISCHE PATENTSCHRIFT**

(45) Veröffentlichungstag der Patentschrift: **19.09.90**

(21) Anmeldenummer: **85104622.7**

(22) Anmeldetag: **17.04.85**

(51) Int. Cl.⁵: **B 01 D 11/02, C 12 C 9/02, B 01 D 11/00**

(54) **Verfahren zum Abscheiden von mittels Hochdruckextraktion gewonnenen Stoffen.**

(30) Priorität: **17.04.84 DE 3414562**

(43) Veröffentlichungstag der Anmeldung:
**23.10.85 Patentblatt 85/43**

(45) Bekanntmachung des Hinweises auf die
Patenterteilung:
**19.09.90 Patentblatt 90/38**

(84) Benannte Vertragsstaaten:
**AT BE CH DE FR GB IT LI LU NL SE**

(56) Entgegenhaltungen:
**DE-A-2 801 843**
**DE-C-1 493 190**
**US-A-2 150 860**
**US-A-4 104 409**

**CHEM.-ING.-TECH., Band 52, Nr. 3, 1980, Seiten 264-265, Verlag Chemie, Weinheim; P. WEILAND et al.: "Wissenschaftliche Forschungsarbeit. Fluiddynamik und Stoffübergang in einem Airlift-Schlaufenreaktor mit äusserem Umlauf"**

(73) Patentinhaber: **SKW Trostberg Aktiengesellschaft**
**Dr.-Albert-Frank-Strasse 32 Postfach 1150/1160**
**D-8223 Trostberg (DE)**

(72) Erfinder: **Jekat, Herbert, Dr.**
**Breslauer Strasse 73**
**D-7860 Schopfheim (DE)**
Erfinder: **Schütz, Erwin, Dr.**
**Steiner Strasse 22**
**D-8221 Palling (DE)**
Erfinder: **Stork, Kurt**
**Ulrich-Steinberger-Platz 3**
**D-8075 Vohburg (DE)**

(74) Vertreter: **Weickmann, Heinrich, Dipl.-Ing. et al**
**Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Postfach 860820**
**D-8000 München 86 (DE)**

Courier Press, Leamington Spa, England.

EP 0 159 021 B1

## Beschreibung

Die vorliegende Erfindung betrifft ein Verfahren zum Abscheiden von mittels Hochdruckextraktion gewonnenen Stoffen aus dem Extraktionsmittel.

Die Hochdruckextraktion, die ein neues Trennverfahren zur Gewinnung und Abtrennung löslicher Stoffe aus Stoffgemischen pflanzlicher, tierischer oder mineralischer Herkunft darstellt, erfolgt in zwei Stufen. Im ersten Schritt wird das zur Extraktion verdichtete Gas, z. B. $CO_2$ dessen Druck im über- oder unterkritischen Bereich liegen kann, mit dem Extrakt beladen. Daran schließt sich die Abscheidung der extrahierten Stoffe an, wobei die Löslichkeit der extrahierten Stoffe auf drei verschiedenen Wegen vermindert werden kann:

a) Bei der Extraktion im überkritischen Druckbereich wird das Extraktionsmittel auf unterkritischen Druck entspannt und anschließend vollständig verdampft, wobei der Extrakt ohne Rückstände anfällt.

b) Extrahiert man im unterkritischen Druckbereich, so kann die Verdampfung und gegebenenfalls Überhitzung des Extraktionsmittels ohne Entspannungsschritt erfolgen.

c) Will man die Abscheidung des Extrakts im überkritischen Druckbereich des Extraktionsmittels durchführen, ist eine Temperaturänderung erforderlich. Die Abscheidung verläuft dann nicht vollständig.

Das gemeinsame Merkmal aller Abscheidungsvorgänge ist die Zufuhr oder Abfuhr von Wärme, deren Menge von den Verfahrensbedingungen, insbesondere vom Extraktionsmittelumsatz, abhängt. Je höher der Extraktionsmittelumsatz ist, desto mehr steigt die zur Abscheidung erforderliche Wärmemenge pro Zeiteinheit an. Da es sich bei den zu extrahierenden Stoffen sehr oft um Naturstoffe handelt, deren thermische Stabilität begrenzt ist, können zur Verdampfung des Extraktionsmittels hocherhitzte Wärmeträger, wie z. B. überhitzter Wasserdampf, nicht angewendet werden. Man muß statt dessen auf Wärmeträger mit relativ niedriger Temperatur zurückgreifen. Entsprechend den geringen Temperaturdifferenzen zwischen Wärmeträger und Miscella müssen großflächige Heiz- oder Kühlelemente eingesetzt werden. Dies bedeutet einen großen apparativen Aufwand und behindert darüberhinaus die Reinigung der Abscheidungsvorrichtung sehr stark. Die Anforderungen an die Reinigungsmöglichkeiten des Abscheiders sind jedoch sehr hoch, insbesondere dann, wenn in derselben Anlage verschiedene Produkte für den Lebensmittelbereich extrahiert werden.

Bis heute sind verschiedene Konstruktionen und Verfahren zur Abscheidung solcher extrahierter Stoffe bekannt, die jedoch den technischen Erfordernissen nicht optimal entsprechen.

In der DE-A-28 01 843 wird beispielsweise die Abscheidung in einem Druckbehälter offenbart, der über eine innenliegende Heizschlange beheizt wird. Die Nachteile dieses Verfahrens sind, daß die Reinigung der Heizschlangen problematisch ist und daß die Heizschlangen druckfest ausgelegt und in einem Druckbehälter angeordnet sein müssen, was hohe Investitionskosten erfordert.

Gemäß der DE-C-14 93 190 wird die Abscheidung in einem Druckbehälter mit vorgeschaltetem Wärmeaustauscher durchgeführt. Dabei kann es jedoch sehr leicht zu Verstopfungen im Wärmeaustauscher kommen und das Problem der Reinigung ist auch bei diesem Verfahren nicht gelöst.

Schließlich ist aus J. Inst. Brew. 86, 234 (1980) ein Abscheider bekannt, der als außenbeheizter Druckbehälter betrieben wird. Dieser Abscheider ermöglicht aber wegen der kleinen Heizfläche im technischen Maßstab keinen ausreichenden Wärmeübergang zur Verdampfung des Extraktionsmittels.

Der vorliegenden Erfindung liegt daher die Aufgabe zugrunde, ein Verfahren zum Abscheiden von mittels Hochdruckextraktion gewonnenen Stoffen zu entwickeln, das diese Nachteile nicht aufweist und das es ohne großen apparativen Aufwand gestattet, auch die für einen hohen Extraktionsmittelumsatz notwendige Wärmemenge zu- oder abzuführen.

Diese Aufgabe wird erfindungsgemäß gelöst durch ein Verfahren zum Abscheiden von mittels Hochdruckextraktion gewonnenen Stoffen aus dem Extraktionsmittel durch Einleiten des mit den extrahierten Stoffen beladenen Extraktionsmittels in einen Abscheider, der einen Kopf 2, einen Boden 3, ein Rücklaufrohr 4, einen Wärmeaustauscher 1 in Form von einem oder mehreren Rohren und einen Filter 11 am Kopf 2 umfaßt, wobei man den Extrakt über den Wärmeaustauscher 1, den Kopf 2 und das Rücklaufrohr 4 zum Boden 3 zurückführt und dort entweder ausschleust und/oder in den Wärmeaustauscher 1 zurückleitet und wobei das im Wärmeaustauscher verdampfende Extraktionsmittel über den Filter 11 am Kopf 2 abgeführt wird, dadurch gekennzeichnet, daß man das beladene Extraktionsmittel von unten durch Düsen 9 in den Wärmeaustauscher 1 einsprüht.

Überraschenderweise wurde gefunden, daß mit Hilfe des erfindungsgemäßen Verfahrens sehr hohe Wärmedurchgänge erzielt werden können, so daß mit verhältnismäßig niedrigen Temperaturgradienten zwischen Wärmeträger und beladenem Extraktionsmittel bzw. mit relativ kleinen Heizflächen gearbeitet werden kann. So sind beim erfindungsgemäßen Verfahren für einen bestimmten Extraktionsmittelumsatz sehr viel kleinere Heizflächen notwendig als bei dem bisher bekannten Abscheideverfahren. Darüberhinaus verstopfen die Düsen überraschenderweise mit dem erfindungsgemäßen Verfahren nicht, auch wenn höherviskose Stoffe abgeschieden werden.

Das erfindungsgemäße Verfahren kann sowohl diskontinuierlich als auch kontinuierlich durchgeführt werden.

Bei einer bevorzugten Ausführungsform des erfindungsgemäßen Verfahrens wird der Füllstand im Rücklaufrohr 4 über Füllstandsmessungen gesteuert. Dazu eignen sich die üblichen Meßmethoden wie z. B. Schwimmkörper oder Druckdifferenzmessungen.

Das erfindungsgemäße Verfahren eignet sich zur Abscheidung flüssiger, hochviskoser und auch fester Extrakte. Wenn Extrakte in Form von Feststoffen abgeschieden werden, ist es bevorzugt, den Feststoff bei der Abscheidung bis zur Verflüssigung zu erhitzen. Es können aber auch beispielsweise zwei erfindungsgemäße Abscheider in der Weise alternierend betrieben werden, daß jeweils ein Apparat aus dem Extraktionskreislauf herausgenommen wird und der Extrakt bis zu seiner Verflüssigung erhitzt wird und dann abgezogen werden kann.

Wenn der Extrakt thermisch labil ist, besteht eine andere Möglichkeit zur Abscheidung des Feststoffes. Es wird dann ein Lösungsmittel im Abscheider vorgelegt, das den Extrakt aufnimmt und die Entnahme in flüssiger Form ermöglicht. Diese Ausführungsform ist besonders geeignet zur quantitativen Abscheidung sehr kleiner Extraktmengen. Der Abscheider wird dann bis zu einem bestimmten Füllstand mit einer flüssigen Hilfsphase gefüllt. Dazu verwendet man ein Lösungsmittel, das den extrahierten Stoff entweder lösen, suspendieren oder emulgieren kann. Die flüssige Phase wird dann abgezogen, nachdem der Extrakt bis auf eine gewünschte Konzentration angereichert ist. Dieses Verfahren kann auch kontinuierlich durchgeführt werden. Dann müssen die zugeführten und abgezogenen Mengen an Hilfsphase gleich sein. Als Hilfsphasen kommen besonders solche Flüssigkeiten in Betracht, die für den Extrakt ein geeignetes Aufnahmevermögen besitzen. Solche Flüssigkeiten sind beispielsweise Wasser, anorganische Lösungsmittel, organische Lösungsmittel oder deren Mischungen. Geeignet sind auch verflüssigte Gase.

Zur Abscheidung des Extraktes kann eine Drucksenkung erforderlich sein. Diese wird unmittelbar vor dem Eintritt in den Wärmeaustauscher an einem geeigneten Drosselorgan, entweder im Düsensystem allein oder mittels eines zusätzlichen Ventils, vorgenommen.

Um weitgehend trockene Extrakte zu erhalten, kann man die Abscheidetemperaturen um bis zu 40°C über die Verdampfungstemperatur des Extraktionsmittels, bei den im Abscheider herrschenden Druck erhöhen. Auf diese Weise geht das im Gemisch enthaltene Wasser mit dem Extraktionsmittel über. Gegenstand der Erfindung ist auch eine Vorrichtung zum Abscheiden von mittels Hochdruckextraktion gewonnenen Stoffen aus dem Extraktionsmittel, die einen Abscheider enthält, der einen Kopf 2, einen Boden 3, ein Rücklaufrohr 4 und einen Wärmeaustauscher 1 in Form von einem oder mehreren Rohren umfaßt, wobei sich am Kopf 2 eine Leitung 14 mit einem Filter 11 zum Ableiten des verdampften Extraktionsmittels befindet, dadurch gekennzeichnet, daß am Boden 3 ein Verteilersystem 8 mit Düsen 9 zum Eindüsen des Gemisches, bestehend aus Extraktionsmittel und extrahiertem Stoff, in dem Wärmeaustauscher 1 angeordnet ist.

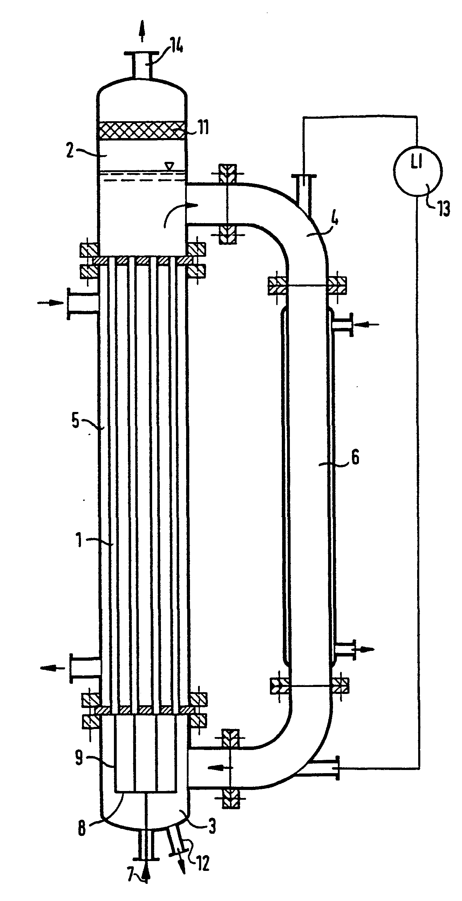

Eine bevorzugte Ausführungsform der erfindungsgemäßen Vorrichtung ist in Fig. 1 gezeigt. Das Rohrbündel 1, der Kopf 2, der Boden 3 und das Rücklaufrohr 4 sind entsprechend den für die Abscheidung anzuwendenden Drücken ausgelegt. Der Mantel 5 des Rohrbündels 1 und die Beheizung 6 des Rücklaufrohres 4 sind auf den Druck des Wärmeträgers abgestimmt. Der Eintritt des beladenen Extraktionsmittels 7 erfolgt bodenseitig über ein Verteilersystem 8. Das mit den extrahierten Stoffen beladene Extraktionsmittel wird über ein Düsensystem 9 in die einzelnen Wärmeaustauscherrohre eingedüst. Als besonders vorteilhaft haben sich dabei Rund- oder Flachdüsen geeigneter Dimensionierung bewährt. In den Wärmeaustauscherrohren 1 findet die eigentliche Trennung der extrahierten Stoffe und des Extraktionsmittels statt. Dabei wird der extrahierte Stoff am Kopf 2 des Abscheiders seitlich über ein Rücklaufrohr 4 abgeführt. Das Rücklaufrohr kann gegebenenfalls beheizt werden über einen Heizmantel 6. Der über das Rücklaufrohr 4 geführte Extrakt kann aus dem Abscheider entweder über die Leitung 12 abgeführt werden oder/und in den Wärmeaustauscher 1 zurückgeleitet werden. Die Rückleitung kann beispielsweise unter Zuhilfenahme einer Pumpe bewerkstelligt werden. Das im Wärmeaustauscher verdampfte Extraktionsmittel wird durch ein Filter 11 kopfseitig über Leitung 14 abgeführt.

Die Extraktentnahme erfolgt in kontinuierlicher Form über ein geeignetes Drosselorgan. Die Regelung der Extraktentnahme kann von Hand erfolgen. Besonders vorteilhaft wird der Füllstand über eine Füllstandsmessung 13 im Rücklaufrohr 4 gesteuert. Dazu eignen sich die üblichen Meßmethoden wie Schwimmkörper oder Druckdifferenzmessungen.

Zur Beheizung des Wärmeaustauschers können übliche Wärmeträger wie Wasser oder sonstige flüssige, dampf- oder gasförmige Medien eingesetzt werden.

Der erfindungsgemäße Abscheider besitzt nicht nur den Vorteil, trotz einer relativ kleinen Heizfläche aufgrund des hohen Wärmeübergangs einen optimalen Extraktionsmittelumsatz zu ermöglichen, sondern läßt sich auch außerordentlich leicht reinigen. Durch seinen einfachen Aufbau kann für entsprechende Arbeiten der Kopf des Abscheiders und gegebenenfalls auch der Boden leicht demontiert werden, um so den Reinigungsvorgang zu erleichtern.

Das nachfolgende Beispiel erläutert die Erfindung, ohne sie darauf zu beschränken.

Beispiel

Ein mit überkritischem $CO_2$ hergestellter Hopfenextrakt wird in einem Extraktabscheider nach dem erfindungsgemäßen Verfahren bei einem Druck von 61 bar abgeschieden.

Der Abscheider besteht aus einem 9,4 m hohen Wärmeaustauscherrohr, das mit Wasser von 65°C mit 400 Liter pro Stunde beheizt wird, einem kopfseitig angebrachten Abscheidetopf mit Filter und einem unbeheizten Extrakt-Rücklaufrohr. Der Abscheider ist wärmeisoliert ausgeführt. Nach einer Einstellzeit, nach der der Extraktfüllstand durch Druckdifferenzmessung mit 40% bestimmt wird, beträgt die gemessene Temperatur der Miscella in der Nähe der Eindüsung am unteren Ende des Wärmeaustauschrohrs 25°C, die Temperatur am Kopf des Wärmeaustauschers 51°C und im Extraktrücklauf 49°C.

## Patentansprüche

1. Verfahren zum Abscheiden von mittels Hochdruckextraktion gewonnenen Stoffen aus dem Extraktionsmittel durch Einleiten des mit den extrahierten Stoffen beladenen Extraktionsmittels in einen Abscheider, der einen Kopf (2), einen Boden (3), ein Rücklaufrohr (4), einen Wärmeaustauscher (1) in Form von einem oder mehreren Rohren und einen Filter (11) am Kopf (2) umfaßt, wobei man den Extrakt über den Wärmeaustauscher (1), den Kopf (2) und das Rücklaufrohr (4) zum Boden (3) zurückführt und dort entweder ausschleust und/oder in den Wärmeaustauscher (1) zurückleitet und wobei das im Wärmeaustauscher verdampfende Extraktionsmittel über den Filter (11) am Kopf (2) abgeführt wird, dadurch gekennzeichnet, daß man das beladene Extraktionsmittel von unten durch Düsen (9) in den Wärmeaustauscher (1) einsprüht.

2. Verfahren nach Anspruch 1, dadurch gekennzeichnet, daß man das Verfahren kontinuierlich durchführt.

3. Verfahren nach Anspruch 1 oder 2, dadurch gekennzeichnet, daß der Füllstand im Rücklaufrohr (4) über Füllstandsmessungen gesteuert wird.

4. Verfahren nach einem der Ansprüche 1 bis 3, dadurch gekennzeichnet, daß das mit den extrahierten Stoffen beladene Extraktionsmittel über Rund- oder Flachdüsen (9) in den Wärmeaustauscher (1) eingesprüht wird.

5. Verfahren nach einem der Ansprüche 1 bis 4, dadurch gekennzeichnet, daß flüssige und/oder hochviskose Extrakte abgeschieden werden.

6. Verfahren nach einem der Ansprüche 1 bis 4, dadurch gekennzeichnet, daß Extrakte in Form von Feststoffen abgeschieden werden.

7. Verfahren nach Anspruch 6, dadurch gekennzeichnet, daß der Feststoff bei der Abscheidung bis zu seiner Verflüssigung erhitzt wird.

8. Verfahren nach einem der Ansprüche 1 bis 7, dadurch gekennzeichnet, daß im Abscheider ein Lösungsmittel vorgelegt wird, das die extrahierten Stoffe zu lösen, suspendieren oder emulgieren vermag.

9. Vorrichtung zum Abscheiden von mittels Hochdruckextraktion gewonnenen Stoffen aus dem Extraktionsmittel, die einen Abscheider enthält, der einen Kopf (2), einen Boden (3), ein Rücklaufrohr (4) und einen Wärmeaustauscher (1) in Form von einem oder mehreren Rohren umfaßt, wobei sich am Kopf (2) eine Leitung (14) mit einem Filter (11) zum Ableiten des verdampften Extraktionsmittels befindet, dadurch gekennzeichnet, daß am Boden (3) ein Verteilersystem (8) mit Düsen (9) zum Eindüsen des Gemisches, bestehend aus Extraktionsmittel und extrahiertem Stoff, in dem Wärmeaustauscher (1) angeordnet ist.

## Revendications

1. Procédé de séparation de substances obtenues par extraction sous haute pression de l'agent d'extraction par introduction de l'agent d'extraction chargé des substances extraites dans un séparateur qui comprend une tête (2), un fond (3), un tube de retour (4), un échangeur de chaleur (1) sous la forme d'un ou plusieurs tubes et un filtre (11) sur la tête (2), l'extrait étant envoyé par l'échangeur de chaleur (1), la tête (2) et le tube de retour (4) au fond (3) et y étant éclusé et/ou renvoyé dans l'échangeur de chaleur (1), et l'agent d'extraction se vaporisant dans l'échangeur de chaleur étant éliminé par le filtre (11) sur la tête (2), caractérisé en ce qu'on injecte l'agent d'extraction chargé par en-dessous, à travers des buses (9), dans l'échangeur de chaleur (1).

2. Procédé selon la revendication 1, caractérisé en ce qu'on effectue le procédé en continu.

3. Procédé selon les revendications 1 ou 2, caractérisé en ce que le niveau dans le tube de retour (4) est commandé par des mesures de niveau.

4. Procédé selon l'une des revendications 1 à 3, caractérisé en ce que l'agent d'extraction chargé des substances extraites est injecté dans l'échangeur de chaleur (1) par des buses rondes ou plates (9).

5. Procédé selon l'une des revendications 1 à 4, caractérisé en ce qu'on sépare des extraits liquides et/ou fortement visqueux.

6. Procédé selon l'une des revendications 1 à 4, caractérisé en ce que les extraits sont séparés sous forme de substances solides.

7. Procédé selon la revendication 6, caractérisé en ce que la substance solide est chauffée lors de la séparation jusqu'à sa liquéfaction.

8. Procédé selon l'une des revendications 1 à 7, caractérisé en ce qu'on introduit dans le séparateur un solvant qui est capable de dissoudre, de mettre en suspension ou d'émulsionner les substances extraites.

9. Dispositif pour la séparation de substances obtenues par extraction sous haute pression de l'agent d'extraction, qui contient un séparateur, lequel comprend une tête (2), un fond (3), un tube de retour (4) et un échangeur de chaleur (1) sous la forme d'un ou plusieurs tubes, une canalisation (14) avec un filtre (11) pour l'évacuation de l'agent d'extraction vaporisé se trouvant sur la tête (2), caractérisé en ce que sur le fond (3), un système de distributeur (8) avec des buses (9) pour l'injection du mélange constitué de l'agent d'extraction et de la substance extraite est disposé dans l'échangeur de chaleur (1).

**Claims**

1. Process for the separation of materials obtained by means of high pressure extraction from the extraction agent by passing the extraction agent loaded with the extracted materials into a separator which comprises a head (2), a bottom (3), a runback pipe (4), a heat exchanger (1) in the form of one or more pipes and a filter (11) on the head (2), whereby one returns the extract via the heat exchanger (1), the head 2 and the runback pipe (4) to the bottom (3) and there either discharges and/or returns to the heat exchanger (1) and whereby the extraction agent evaporating in the heat exchanger is removed via a filter (11) on the head (2), characterised in that one sprays the loaded extraction agent from below through nozzles (9) into the heat exchanger (1).

2. Process according to claim 1, characterised in that the process is carried out continuously.

3. Process according to claim 1 or 2, characterised in that the state of filling in the runback pipe (4) is controlled via measurements of the state of filling.

4. Process according to one of claims 1 to 3, characterised in that the extraction agent loaded with the extracted material is sprayed into the heat exchanger (1) via round or flat nozzles (9).

5. Process according to one of claims 1 to 4, characterised in that liquid and/or highly viscous extracts are separated.

6. Process according to one of claims 1 to 4, characterised in that the extracts are separated out in the form of solid materials.

7. Process according to claim 6, characterised in that the solid material is, in the case of the separation, heated to its liquefaction.

8. Process according to one of claims 1 to 7, characterised in that a solvent is placed in the separator which is able to dissolve, suspend or emulsify the extracted materials.

9. Device for the separation of materials obtained by means of high pressure extraction from the extraction agent which contains a separator, which comprises a head (2), a bottom (3), a runback pipe (4) and a heat exchanger (1) in the form of one or more pipes, whereby, on the head (2) is present a pipe (14) with a filter (11) for the removal of the evaporated extraction agent, characterised in that, on the bottom (3), is arranged a distributor system (8) with nozzles (9) for the spraying of the mixture, consisting of extraction agent and extracted material, into the heat exchanger (1).